(19) Europäisches Patentamt
European Patent Office
Office européen des brevets

(11) EP 3 080 172 B1

(12) # EUROPEAN PATENT SPECIFICATION

(45) Date of publication and mention of the grant of the patent:
**04.10.2017 Bulletin 2017/40**

(21) Application number: **14789297.0**

(22) Date of filing: **27.10.2014**

(51) Int Cl.:
***C08F 210/06*** *(2006.01)* ***C08J 5/18*** *(2006.01)*

(86) International application number:
**PCT/EP2014/072985**

(87) International publication number:
**WO 2015/086213 (18.06.2015 Gazette 2015/24)**

(54) **MULTILAYER METALLIZED FILMS**

MEHRSCHICHTIGE METALLISIERTE FOLIEN

FILMS MÉTALLISÉS MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2013 EP 13196265**

(43) Date of publication of application:
**19.10.2016 Bulletin 2016/42**

(73) Proprietor: **Basell Poliolefine Italia S.r.l.**
**20127 Milano (IT)**

(72) Inventors:
- **MARZOLLA, Roberta**
  **44122 Ferrara (IT)**
- **CAPUTO, Tiziana**
  **44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 1 941 997** **EP-A1- 2 666 793**
**US-B1- 6 221 984**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 080 172 B1

**Description**

FIELD OF THE INVENTION

The present invention relates to propylene terpolymers. particularly suitable to be used to obtain films such as cast films, bi- or mono-oriented films, heat-sealable films and metalized films having good optical properties and excellent sealing properties combined with good shrinkage properties and softness.

BACKGROUND OF THE INVENTION

Propylene copolymers or terpolymers are used because, with respect to propylene homopolymers, are characterized by a better impact, lower rigidity, better transparency. In some cases however, it is difficult to find the acceptable balance between those properties, particularly when properties contrasting to each other are desired. When a certain softness is desired, for example, it is commonly obtained in the presence of high amount of xylene soluble fractions that make them unsuitable for food contact applications.
Metalized films have been widely used for their superior decorative properties, gas barrier properties and light-shielding properties. In particular aluminum metallized film has been used in large amount.
WO 2003/037981 discloses pipes made from at least a polypropylene composition obtained by a process carried out in a reactor comprising two interconnected polymerization zones.
Said process provides polypropylene compositions with high stiffness and impact resistance particularly suitable for pipes. According to this document when the propylene composition is a propylene-ethylene-butene-1 terpolymer the ethylene content ranges from 2-5 wt%.
WO 2009/019169 discloses a propylene ethylene 1-butene terpolymer obtained by a process carried out in a reactor comprising two interconnected polymerization zones. This terpolymer has a xylene soluble fraction higher than 9 wt% and a comonomers content higher than 8 wt%. In particular when the ethylene content is lower than 2.5 wt% the 1-butene content is higher than 10 wt%. Said terpolymers are further characterized by a melting temperature T m higher than or equal to (28.013X + 120.5)°C, preferably higher than or equal to (21.087X + 123.73)°C, where X is the value of the weight ratio of ethylene content to the $C_4$-$C_8$ alpha-olefins content.

SUMMARY OF THE INVENTION

The applicant unexpectedly found that a propylene ethylene 1-butene terpolymer having a certain amount of comonomer and obtained by a polymerization process carried out in a reactor comprising two interconnected polymerization zones can be advantageously used as sealing layer in the metalized cast films.
Thus an object of the present invention is a propylene ethylene 1-butene terpolymer wherein:

(i) the content of ethylene derived units ranges from 1.1 wt% to 1.9 wt%, preferably from 1.2 wt% to 1.8 wt%; more preferably from 1.3 wt% to 1.7 wt%;
(ii) the content of 1-butene ranges from 5.0 wt% to 9.0 wt%, preferably from 6.0 wt% to 8.5 wt%, more preferably from 6.5 wt% to 8.0 wt%;
(iii) the melting point (Tm) of the non nucleated terpolymer ranges from 125°C to 137°C; preferably from 130°C to 135°C.
(iv) the xylene soluble fraction at 25°C is lower than 7.5 wt% ; preferably lower than 6.5 wt% more preferably lower than 5.5 wt%.

DETAILED DESCRIPTION OF THE INVENTION

The terpolymer of the present invention are characterized by a low sealing initiation temperature (SIT) and in particular from an high difference between the melting point and the sit. Furthermore the particular features of the terpolymer of the present invention give rises to the effect that no migration to the surface of oligomers and additives is present in the film obtained with said terpolymer.
The sum of these features renders the terpolymer of the present invention particularly suitable to be used as sealing layer in a metallized multilayer film.
The terpolymer used in the present invention can be prepared by polymerizing propylene ethylene and 1-butene in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound. An external donor is optionally added.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

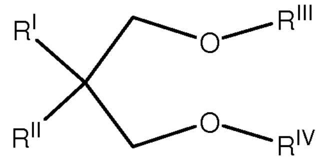

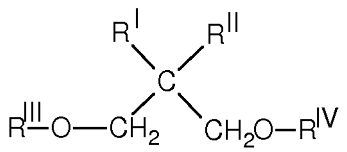

wherein $R^{I}$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst components is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si($OCH_3$)$_2$, (cyclohexyl)(methyl)Si ($OCH_3$)$_2$, (cyclopentyl)$_2$Si($OCH_3$)$_2$ and (phenyl)$_2$Si($OCH_3$)$_2$ and (1,1,2-trimethylpropyl)Si($OCH_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present invention, the terpolymers are preferably prepared by using catalysts containing a phthalate as inside donor and (cyclopentyl)$_2$Si($OCH_3$)$_2$ as outside donor, or the said 1,3-diethers as inside donors.

The said propylene-ethylene-1-butene terpolymers are produced by a polymerisation process carried out in at least two interconnected polymerisation zones.

The process according to the preferred process is illustrated in EP application 782 587.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerization zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

In particular in order to obtain the terpolymers of the present invention no barrier feed has to be used between the two interconnected zones

The various catalysts are fed up to the riser at any point of the said riser. However, they can also be fed at any point of the downcomer. The catalyst can be in any physical state, therefore catalysts in either solid or liquid state can be used.

The propylene terpolymer of the present invention preferably is further endowed with one or more of the following features:

- the melt flow rate (MFR) (ISO 1133 230°C, 2.16 kg) ranges from 3 to 20 g/10 min; preferably from 5 to 10 g/10 min;
- the low sealing initiation temperature (SIT) ranges from 98 to 120°C; preferably from 105 to 115 °C.

The terpolymer of the present invention are particularly suitable for film applications such cast films and oriented films, BOPP films, heat-sealable films and all the applications requiring heat sealability and softness. Such propylene terpolymers have a good balance between optical properties and sealing properties combined with good shrinkage properties and softness.

In particular the terpolymer of the present invention are particularly fit for metalized cast film applications. The terpolymer of the present application are particularly fit for the sealant layer of a metallized cast film comprising a metalized

layer and a sealant layer.

Thus a further object of the present invention is a metalized film, preferably a metalized cast film comprising at least one metallized layer and one sealant layer wherein the sealant layer comprises the terpolymer of the present invention.

The propylene terpolymers of the invention can optionally further comprise at least one nucleating agent. Preferably, the propylene terpolymers comprise up to 2500 ppm, more preferably from 200 to 2000 ppm, of at least one nucleating agent.

The at least one nucleating agent can be selected among inorganic additives such as talc, silica or kaolin, salts of monocarboxylic or polycarboxylic acids, e.g. sodium benzoate or aluminum tert-butylbenzoate, dibenzylidenesorbitol or its $C_1$-$C_8$-alkyl-substituted derivatives such as methyldibenzylidenesorbitol, ethyldibenzylidenesorbitol or dimethyldibenzylidenesorbitol or salts of diesters of phosphoric acid, e.g. 2,2'-methylenebis(4,6,-di-tert-butylphenyl)phosphate sodium or lithium salt. Particularly preferred nucleating agents are 3,4-dimethyldibenzylidenesorbitol; aluminum-hydroxy-bis[2,2'-methylene-bis(4,6-di-t-butylphenyl)phosphate]; sodium 2,2'-methylene-bis(4,6-ditertbutylphenyl)phosphate and bicyclo[2.2.1]heptane-2,3-dicarboxylic acid, disodium salt (1R,2R,3R,4S), and HPN-20E that contains Zinc compounds and 1,2-ciclohexanedicarboxylic acid calcium salt. The at least one nucleating agent may be added to the propylene terpolymer by known methods, such as by melt blending the at least one nucleating agent and the propylene terpolymer under shear condition in a conventional extruder.

The propylene terpolymers obtained by the process of the present invention may then be added with additional additives commonly employed in the polyolefin field, such as antioxidants, light stabilizers, antiacids, antiblocking, colorants and fillers.

EXAMPLES

The following characterization methods were used in testing the propylene terpolymers produced.

<u>Determination of the comonomer content:</u>

The comonomers content have been determined by infrared spectroscopy by collecting the IR spectrum of the sample vs. an air background with a Fourier Transform Infrared spectrometer (FTIR) the instrument data acquisition parameters are:

purge time: 30 seconds minimum
collect time: 3 minutes minimum
apodization: Happ-Genzel
resolution: 2 cm-1.

Sample Preparation:

Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).

Pressing temperature is 180±10°C (356°F) and about 10 kg/cm2 (142.2 PSI) pressure for about one minute. Release the pressure and remove from the press and cool the sample to room temperature.

The spectrum of a pressed film of the polymer is recorded in absorbance vs. wavenumbers (cm-1). The following measurements are used to calculate ethylene and 1-butene content:

Area (At) of the combination absorption bands between 4482 and 3950 cm -1 which is used for spectrometric normalization of film thickness.

Area (AC2) of the absorption band between 750-700 cm-1 after two proper consecutive spectroscopic subtractions of an isotactic non additivate polypropylene spectrum and then of a reference spectrum of an 1-butene-propylene random copolymer in the range 800-690 cm-1.

Height (DC4) of the absorption band at 769 cm-1 (maximum value), after two proper consecutive spectroscopic subtractions of an isotactic non additivate polypropylene spectrum and then of a reference spectrum of an ethylene-propylene random copolymer in the range 800-690 cm-1.

In order to calculate the ethylene and 1-butene content calibration straights lines for ethylene and 1-butene obtained by using samples of known amount of ethylene and 1-butene are needed:

Calibration of ethylene:

Calibration straight line is obtained by plotting AC2 /At versus ethylene molar percent (%C2m). The slope GC2 is calculated from a linear regression.

Calibration of 1-butene

A calibration straight line is obtained by plotting DC4 /At versus butene molar percent (%C4m). The slope GC4 is calculated from a linear regression.

Spectrum of the unknown sample is recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

The 1,butene content (% molar fraction C4m) of the sample is calculated as follows:

$$\%C4m = \frac{1}{G_{C4}} \cdot \left(\frac{A_{C4}}{A_t} - I_{C4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

Solubility in xylene: 2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus one calculates the percent by weight of polymer soluble and insoluble at room temperature (25° C)

Melt Flow Rate (MFR): Determined according to ISO 1133 230°C, 2.16 kg.

Melting temperature and crystallization temperature: Determined by differential scanning calorimetry (DSC). weighting 6 1 mg, is heated to 220 1° C at a rate of 20 °C/min and kept at 220 1° C for 2 minutes in nitrogen stream and it is thereafter cooled at a rate of 20° C/min to 40 2° C, thereby kept at this temperature for 2 min to crystallise the sample. Then, the sample is again fused at a temperature rise rate of 20° C/min up to 220° C 1. The melting scan is recorded, a thermogram is obtained, and, from this, melting temperatures and crystallization temperatures are read.

Preparation of the cast film specimens

Films with a thickness of 50 μm were prepared by extruding each polymer composition in a single screw Collin extruder (length/diameter ratio of screw: 25) at a film drawing speed of 7 m/min and a melt temperature of 210-280 °C.

Sealing Initiation Temperature (S.I.T.):

Determined as follows.

Preparation of the film specimens

Some films with a thickness of 50 μm are prepared by extruding each test composition in a single screw Collin extruder (length/diameter ratio of screw: 25) at a film drawing speed of 7 m/min, a melt temperature of 210-280 °C and a chill roll temperature from 10-20 °C. Each resulting film is superimposed on a 1000 μm thick film of a propylene homopolymer having an isotacticity index of 97 and a MFR L of 2 g/10 min. The superimposed films are bonded to each other in a Carver press at 200 °C under a 9000 kg load, which is maintained for 5 minutes.

The resulting laminates are stretched longitudinally and transversally, i.e. biaxially, by a factor 6 with a Brukner Karo 4 film stretcher at 150 °C, thus obtaining a 20 μm thick film (18 μm homopolymer + 2 μm test composition).

2 x 5 cm specimens are cut from the films.

Determination of the S.I.T.

For each test two of the above specimens are superimposed in alignment, the adjacent layers being layers of the particular test composition. The superimposed specimens are sealed along one of the 5 cm sides with a Brugger Feinmechanik Sealer, model HSG-ETK 745. Sealing time is 0.5 seconds at a pressure of 0.1 $N/mm^2$. The sealing temperature is increased for each seal, starting from about 10 °C less than the melting temperature of the test composition. The sealed samples are left to cool and then their unsealed ends are attached to an Instron machine where they are tested at a traction speed of 50 mm/min.

The S.I.T. is the minimum sealing temperature at which the seal does not break when a load of 2 Newtons is applied in the said test conditions.

Example 1 and comparative example 2:

Propylene terpolymers are prepared by polymerising propylene, ethylene and butene-1 in the presence of a highly stereospecific Ziegler-Natta catalyst.

The Ziegler-Natta catalyst was prepared according to the Example 5, lines 48-55 of the European Patent EP728769. Triethylaluminium (TEA) was used as co-catalyst and dicyclopentyldimethoxysilane as external donor, with the weight ratios indicated in Table 1. The above catalyst system is then transferred into a reactor containing an excess of liquid propylene and propane to carry out prepolymerisation at 25° C for 11 minutes before introducing it into a polymerisation reactor.

The propylene terpolymers of the examples were prepared in a single gas-phase polymerization reactor comprising two interconnected polymerization zones, a riser and a downcomer, as described in the European Patent EP782587 and WO00/02929.

Into the polymerisation reactor the propylene terpolymers are produced by feeding in a continuous and constant flow the prepolymerized catalyst system, hydrogen (used as molecular weight regulator), propylene, ethylene and butene-1 in the gas state (the feeding quantities expressed in mol% are shown in table 1).

The other operative conditions are indicated in Table 1.

The polymer particles exiting from the polymerization step were subjected to a steam treatment to remove the unreacted monomers and dried. The characteristics of the polymer has been reported on table 2

Table 1

| | Ex 1 | Comp ex 2 |
|---|---|---|
| **PRECONTACT** | | |
| Temperature, °C | 15 | 15 |
| Residence time, min | 11 | 12 |
| Catalyst, g/h | 8 | 10 |
| TEA/CAT, g/g | 5 | 4 |

(continued)

| | Ex 1 | Comp ex 2 |
|---|---|---|
| **PRECONTACT** | | |
| TEA/Ext. Donor, g/g | 4 | 4 |
| **PREPOLYMERIZATION** | | |
| Temperature, °C | 20 | 20 |
| Residence time, min | 6 | 6 |
| **POLYMERIZATION** | | |
| Temperature, °C | 72 | 71 |
| Pressure, barg | 23 | 21 |
| C3-, mole% | 68 | 61 |
| C2-, mole% | 1 | 0.8 |
| C4-, mole% | 7.5 | 10 |
| $H_2/C_3^-$, mol ratio | 0.06 | 0.07 |

Table 2

| EXAMPLE | | 1 | Comp 2 |
|---|---|---|---|
| Melt Index | g/10 min | 6.7 | 7.4 |
| Ethylene content | Wt% | 1.5 | 0.9 |
| 1-butene content | Wt% | 7.4 | 10.5 |
| Xylene solubles at 25°C | Wt% | 4.8 | 6.7 |
| Melting point | °C | 134 | 131 |

Cast film of the polymer of example 1 and comparative example 2 have been produced as described above. The cast films have been metallized by depositing aluminum under vacuum and then sealed on the non-metallized side. The migration of the obtained films has been checked

table 3

| Ex | 1 | Comp 2 |
|---|---|---|
| S.I.T. °C | 111 | 109 |
| Migration in line | NO | YES |
| Migration after VM | NO | YES |
| VM = vacuum metallization | | |

. From table 3 it is clear that by using the terpolymer of the present invention it is possible to produce a better metallized film without the migration effects and without detrimental effect on the sealing properties.

**Claims**

**1.** A propylene ethylene 1-butene terpolymer wherein:

(i) the content of ethylene derived units ranges from 1.1 wt% to 1.9 wt%,
(ii) the content of 1-butene ranges from 5.0 wt% to 9.0 wt%,

(iii) the melting point (Tm) of the non nucleated terpolymer ranges from 125°C to 137°C;
(iv) the xylene soluble fraction at 25°C is lower than 8.0 wt%.

2. The propylene ethylene 1-butene terpolymer according to claim 1 wherein:

(i) the content of ethylene derived units ranges from 1.2 wt% to 1.8 wt%;
(ii) the content of 1-butene ranges from 6.0 wt% to 8.5 wt%;

3. Films comprising the propylene ethylene 1-butene terpolymer of claim 1

4. A metalized film comprising at least one metallized layer and one sealant layer wherein the sealant layer comprises the terpolymer of claim 1.

## Patentansprüche

1. Terpolymer aus Propylen, Ethylen, 1-Buten, wobei:

(i) der Gehalt an von Ethylen abgeleiteten Einheiten im Bereich von 1,1 Gew.% bis 1,9 Gew.% liegt,
(ii) der Gehalt an 1-Buten im Bereich von 5,0 Gew.% bis 9,0 Gew.% liegt,
(iii) der Schmelzpunkt (Tm) des nicht nukleierten Terpolymers im Bereich von 125 °C bis 137 °C liegt,
(iv) die xylollösliche Fraktion bei 25 °C unter 8,0 Gew.% liegt.

2. Terpolymer aus Propylen, Ethylen, 1-Buten nach Anspruch 1, wobei:

(i) der Gehalt an von Ethylen abgeleiteten Einheiten im Bereich von 1,2 Gew.% bis 1,8 Gew.% liegt,
(ii) der Gehalt an 1-Buten im Bereich von 6,0 Gew.% bis 8,5 Gew.% liegt.

3. Folien, die das Terpolymer aus Propylen, Ethylen, 1-Buten gemäß Anspruch 1 umfassen.

4. Metallisierte Folie, die mindestens eine metallisierte Schicht und eine Siegelschicht umfasst, wobei die Siegelschicht das Terpolymer gemäß Anspruch 1 umfasst.

## Revendications

1. Terpolymère de propylène, d'éthylène et de 1-butène, dans lequel :

(i) la teneur en unités dérivées de l'éthylène se situe dans la plage de 1,1% en poids à 1,9% en poids,
(ii) la teneur en 1-butène se situe dans la plage de 5,0% en poids à 9,0% en poids,
(iii) le point de fusion (Tm) du terpolymère non nucléé se situe dans la plage de 125°C à 137°C ;
(iv) la fraction soluble dans le xylène à 25°C est inférieure à 8,0% en poids.

2. Terpolymère de propylène, d'éthylène et de 1-butène selon la revendication 1, dans lequel :

(i) la teneur en unités dérivées de l'éthylène se situe dans la plage de 1,2% en poids à 1,8% en poids ;
(ii) la teneur en 1-butène se situe dans la plage de 6,0% en poids à 8,5% en poids.

3. Films comprenant le terpolymère de propylène, d'éthylène et de 1-butène selon la revendication 1.

4. Film métallisé comprenant au moins une couche métallisée et une couche d'étanchéité, la couche d'étanchéité comprenant le terpolymère selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2003037981 A
- WO 2009019169 A
- US 4399054 A
- EP 45977 A
- US 4472524 A
- EP 361493 A
- US 728769 A
- EP 782587 A
- EP 728769 A
- WO 0002929 A